# EUROPEAN PATENT SPECIFICATION

(11) **EP 3 412 477 B1**
(45) Date of publication and mention of the grant of the patent: **21.10.2020**
(21) Application number: 17747307.1
(22) Date of filing: 26.01.2017
(51) Int. Cl.: B60C 13/00, B60C 11/00

(54) **TIRE**
REIFEN
PNEUMATIQUE

(30) Priority: 03.02.2016 JP 2016019220
(43) Date of publication of application: 12.12.2018
(73) Proprietor: Bridgestone Corporation, Tokyo 104-8340 (JP)
(72) Inventor: IWABUCHI, Sotaro, Tokyo 104-8340 (JP)
(74) Representative: Oxley, Robin John George
(86) International application number: PCT/JP2017/002744
(87) International publication number: WO 2017/135149

(56) References cited:
- EP-A1- 2 502 758
- WO-A1-2016/001732
- JP-A- 2002 248 911
- JP-A- 2013 169 827
- JP-A- 2015 209 048
- JP-A- 2015 529 170
- US-A1- 2012 080 129

## Description

### Technical Field

The present disclosure relates to a tire on which marks such as characters are formed.

### Background Art

Conventionally, there is known a technology of forming fine protrusions on side portions of a tire to form a pattern having a contrast. For example, Japanese National-Phase Publication (JP-A) No. 2009-512584 discloses a configuration to control reflection of light by forming a plurality of fibrous materials distributed over the whole area of a pattern to obtain a contrast with the surroundings.
Reference is also made to EP 2502758, which discloses a tire according to the preamble of Claim 1, and to WO 2016/001732, JP 2002-248911 and US 2012/080129.

### SUMMARY OF INVENTION

### Technical Problem

However, such a pattern having the contrast cannot look blacker than blackness of the tire, and thus improvement in visibility is required.

In consideration of the above facts, the disclosure aims to provide a tire having improved visibility by increasing a contrast of a mark portion by a dark portion and increasing uniformity in appearance of a pattern portion even when viewed from various angles. Solution to Problem

The technical problem is solved by a tire according to claim 1.

That is, on an outer surface of the tire is provided a mark formed by a dark portion constituted by a plurality of protrusions. Here, the "outer surface of the tire" refers to a surface visible from the outside of the tire, such as a tire side portion, a tread portion, a groove bottom of a tread, or a groove wall. In addition, the tire includes both of a pneumatic tire and a non-pneumatic tire.

The dark portion constituting the mark is constituted by protrusions having a height of from 0.2 mm to 0.5 mm, and the reflection of light incident on the protrusions is suppressed. In this way, the dark portion constituted by the protrusions can look black, and as a result the pattern can look blacker than the blackness of the tire. Therefore, the contrast between the dark portion and portions other than the dark portion can be increased to improve the visibility.

Wall surfaces constituting the protrusions face six directions. Therefore, even if light is reflected on each wall surface, the reflection directions of light can be made different, and the concentration of reflected light is suppressed. This increases the uniformity in the appearance of the pattern portion even when viewed from various angles to improve the visibility.

Further, the pitch between adjacent protrusions is set to be from 0.15 mm to 0.4 mm. For this reason, the antireflection effect is further enhanced as compared with a case in which the protrusions are separated by more than 0.4 mm or a case in which the protrusions are closer than 0.15 mm to each other. As a result, the dark portion constituting the mark looks blacker.

Since the protrusions are hexagonal in plan view, it is possible to densely arrange the plurality of protrusions in a lateral direction and an oblique direction.

In the first mode of the tire according to the second aspect of the disclosure, the wall portions of the adjacent protrusions are connected to each other.

By doing so, a honeycomb structure can be formed and the rigidity can be increased. In addition, since the protrusions can be densely arranged, the contrast is increased to improve the visibility.

In the first and second modes of the tire according to the third aspect of the disclosure, the wall surfaces constituting the protrusions are inclined, and the angle formed by the wall surfaces opposing to each other is set to be from 15° to 40°.

When the angle formed by the opposing wall surfaces is greater than 40°, a ratio in which the reflected light from the wall surfaces returns from the protrusions to the outside is increased, such that the improvement in the visibility is reduced. That is, light is reflected and thus a difference in contrast with a bright portion is reduced, such that the improvement in the visibility is reduced. Here, when the angle formed by the opposing wall surfaces is less than 15°, the walls constituting the protrusions tend to collapse.

In any one of the first to third modes of the tire according to the fourth aspect of the disclosure, when the area inside the wall portion constituting the protrusion is set to be 100, the area of the top portion of the wall portion is set to be 30 or less.

This makes it possible to increase the proportion occupied by the inner region of the protrusion that suppresses the reflection of light, such that the reduction effect in the reflection by the protrusion can be enhanced. Therefore, it is possible to further improve the visibility. Advantageous Effects of Invention

According to the disclosure, the contrast of the mark portion by the dark portion constituted by the protrusions is increased and the uniformity in the appearance of the pattern portion is increased even when viewed from various angles, thereby improving the visibility.

### BRIEF DESCRIPTION OF DRAWINGS

Fig. 1 is a side view of a tire according to a first embodiment.
Fig. 2 is a partial perspective cross-sectional view of a tread of the tire according to the first embodiment.
Fig. 3 is a plan view showing a part of a dark portion of the tire according to the first embodiment.
Fig. 4 is a perspective view showing a part of the dark portion of the tire according to the first embodiment.
Fig. 5A is a cross-sectional view taken along line A-A in Fig. 4.
Fig. 5B is a cross-sectional view of a modified example of Fig. 5A.
Fig. 6 is an enlarged view showing a main part of a first mark portion of Fig. 1.
Fig. 7 is a plan view showing a part of a dark portion of a tire according to a second embodiment.
Fig. 8 is a diagram showing Tables 1, 2, and 3 which are results of test examples.

### DESCRIPTION OF EMBODIMENTS

### (First Embodiment)

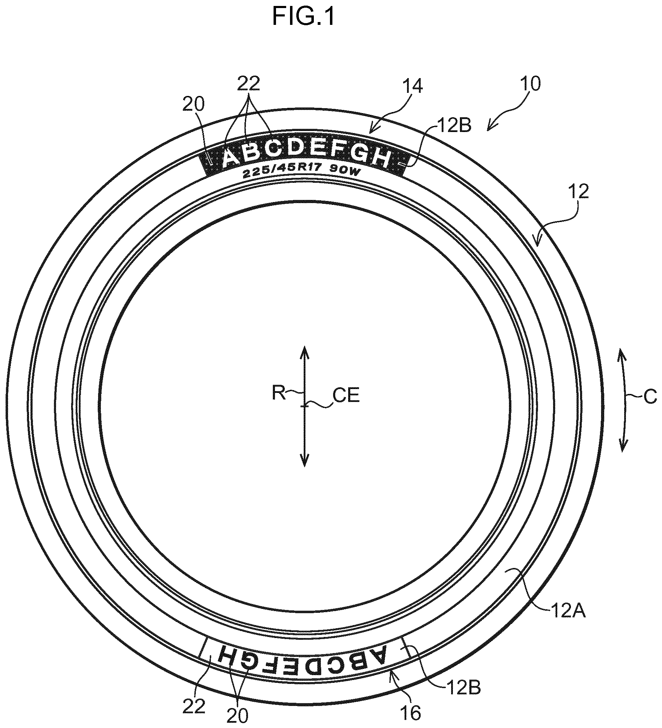

Hereinafter, a first embodiment of the disclosure will be described with reference to the drawings. In Fig. 1, a side view of a tire 10 according to the present embodiment is shown. In the present embodiment, C refers to a circumferential direction of the tire, and R refers to a radial direction of the tire. The tire 10 may be a pneumatic tire or may be a non-pneumatic tire.

A first mark portion 14 and a second mark portion 16 that form a mark are formed on a tire side portion 12 (decorative portion) constituting an outer surface of a tire. Each of the mark portions 14 and 16 is formed in a belt-like arc shape and are formed symmetrically having a center axis CE of the tire interposed therebetween. It is preferable that the mark portions 14 and 16 may be disposed at an outside in a radial direction R of the tire rather than a maximum width portion (that is, a portion where a linear distance between the tire side portions 12 becomes maximum) of the tire. Each of the mark portions 14 and 16 also has a dark portion 20 looking black in appearance and a bright portion 22 looking brighter than the dark portion 20.

In the first mark portion 14 provided on an upper side of the page of Fig. 1, the bright portion 22 is constituted by characters such as "ABCDEFGH" formed by a smooth surface, and the dark portion 20 is formed at an outer circumferential portion of the bright portion 22. The dark portion 20 is a kind of decorative band, and is formed so as to surround the characters formed by the bright portion 22.

Meanwhile, in the second mark portion 16 provided on a lower side of the page of Fig. 1, the characters such as "ABCDEFGH" are formed by the dark portion 20, and an outer peripheral portion of the dark portion 20 is constituted by the bright portion 22. In the second mark portion 16, the bright portion 22 constitutes a kind of decorative band, and is provided so as to surround the characters formed by the dark portion 20. The bright portion 22 is constituted by a smooth surface like a general surface 12A constituting an outer surface other than the mark portion of the tire side portion 12, and the bright portion 22 is constituted by a step surface 12B recessed inward from the general surface 12A.

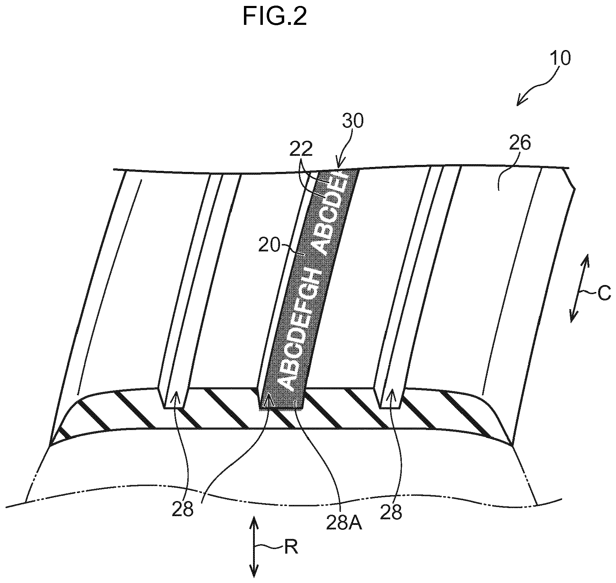

In addition, the tire 10 includes a tread 26 at an outer side in the radial direction R of the tire, as shown in Fig. 2. In the tread 26, a plurality of circumferential grooves 28 are formed. A third mark portion 30 forming a mark is formed on a groove bottom 28A (decorative portion) of the circumferential grooves 28 constituting the outer surface of the tire. The third mark portion 30 has a band shape, and is formed on a part of the circumferential groove 28. The third mark portion 30 also has a dark portion 20 looking black in appearance and a bright portion 22 looking bright.

In the third mark portion 30, the bright portion 22 is constituted by characters such as "ABCDEFGH" formed of a smooth surface, and the dark portion 20 is formed at an outer circumferential portion of the bright portion 22. The dark portion 20 is a kind of decorative band, and is formed so as to surround the characters formed by the bright portion 22.

Each of the mark portions 14, 16, and 30 including the dark portion 20 can be formed by providing corresponding protrusions and recesses in a mold of the tire 10 by laser processing.

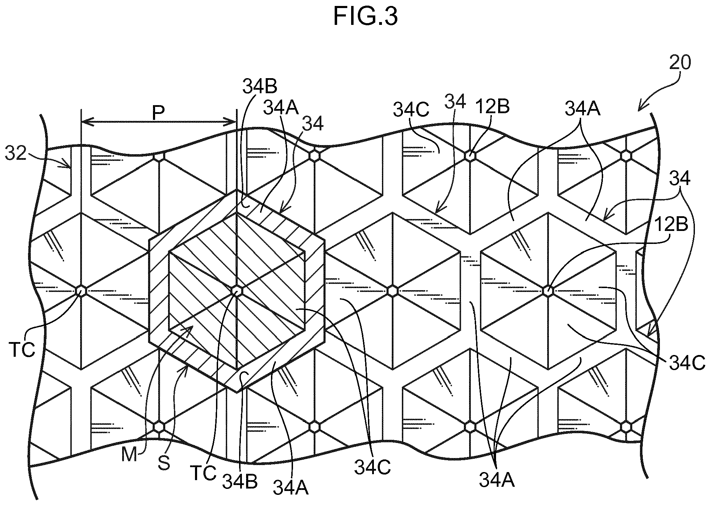

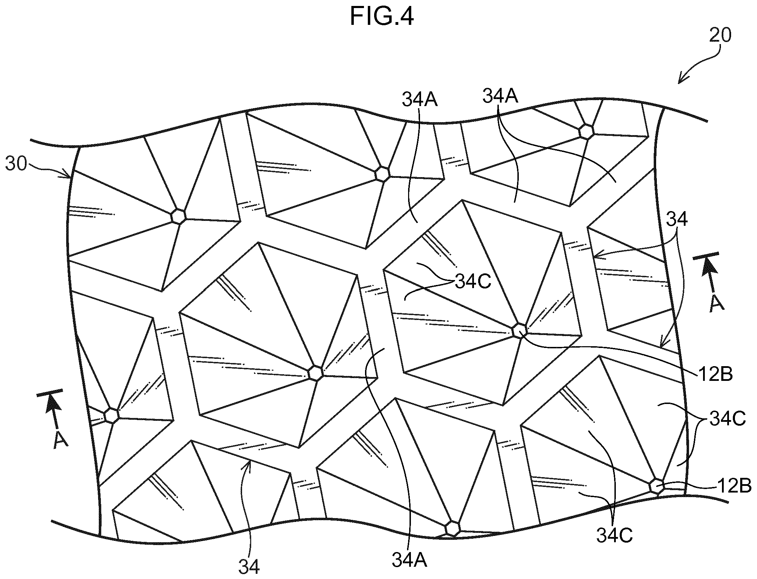

As shown in Figs. 3 and 4, the dark portion 20 of the first mark portion 14 is constituted by a honeycomb structure portion 32, and the honeycomb structure portion 32 is constituted by a plurality of protrusions 34 protruding from the outer surface of the tire. Hereinafter, the dark portion 20 of the first mark portion 14 will be described as an example, but the dark portions 20 of the other mark portions 16 and 30 also have the same structure.

Each protrusion 34 is formed as a protrusion of a regular hexagon in plan view, and the protrusion 34 is constituted by six wall portions 34A. The wall portion 34A of one of the adjacent protrusions 34 constitutes the wall portion 34A of the other of the adjacent protrusions 34, and the wall portion 34A is shared by the adjacent protrusions 34. As a result, the adjacent protrusions 34 are connected to sides of each wall portion 34A of the protrusion 34, so that the honeycomb structure portion 32 having the honeycomb structure is configured.

The pitch P of the adjacent protrusions 34 is set to be from 0.2 mm to 0.3 mm as shown in Fig. 3. This pitch P can be expressed by a separation distance between protrusion centers TC of the adjacent protrusions 34 when intersection points of each diagonal line connecting opposing vertexes of the protrusions 34 having a regular hexagonal shape in plan view are taken as the protrusion centers TC.

It should be noted that a case in which the pitch P between the adjacent protrusions 34 is set to be from 0.2 mm to 0.3 mm is described in the present embodiment, but the present embodiment is not limited thereto. For example, this pitch P can be in a range of from 0.15 mm to 0.4 mm, and it is possible to obtain a predetermined effect as long as the pitch P is in this range.

That is, the protrusion 34 is configured so that the inner side of the wall portion 34A is darkened to look black, but when the pitch P between the adjacent protrusions 34 exceeds 0.3 mm, the effect of making the dark portion 20 look black by the respective protrusions 34 begins to decrease. When the pitch P is less than 0.15 mm, moldability deteriorates.

For this reason, the pitch P between the adjacent protrusions 34 is preferably set to be from 0.15 mm to 0.4 mm, and the pitch P is more preferably set to be from 0.2 mm to 0.3 mm.

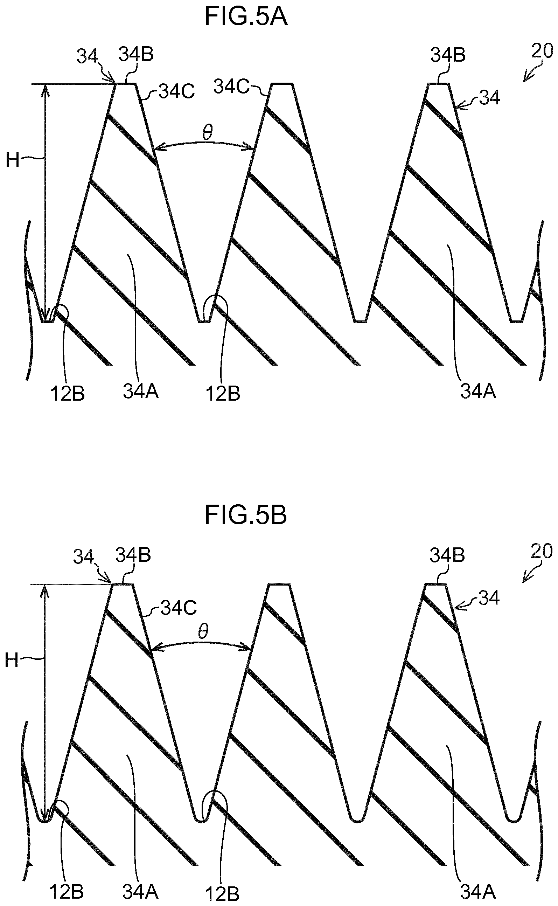

As shown in Fig. 5A, in each protrusion 34, a height H of the wall portion 34A is set to be from 0.3 mm to 0.4 mm. Specifically, as shown in Fig. 1, the step surface 12B retracted inward from the general surface 12A constituting the outer surface other than the mark portion is formed in an arcuate belt shape on the tire side portion 12. As shown in Fig. 5A, the height H from the step surface 12B to a top surface 34B of the protrusion 34 is set to be from 0.3 mm to 0.4 mm.

The vertex of the protrusion 34 may have a curved shape. In this case, light can be scattered at the vertex of the protrusion 34 having the curved shape.

In addition, it is preferable that the vertex of the protrusion 34 has a sharp shape. In this case, the direct reflection of light is suppressed as compared with a case where the vertex of the protrusion 34 is formed in a curved shape or is constituted by a flat top surface 34B, such that it can look blacker.

In the present embodiment, a case in which the height H of the wall portion 34A of the protrusion 34 is set to be from 0.3 mm to 0.4 mm is described, but the present embodiment is not limited thereto. For example, the height H can be set in a range of from 0.2 mm to 0.5 mm, and a predetermined effect can be obtained as long as the height H is in this range.

In the protrusion 34, the reflection of incident light is suppressed to form the dark portion 20, but when the height H of the protrusion 34 is less than 0.3 mm, the effect of making the dark portion 20 look black due to the protrusion 34 begins to decrease, and when the height H is less than 0.2 mm, the reduction in the effect becomes remarkable. However, when the height H of the protrusion 34 exceeds 0.5 mm, the moldability deteriorates.

For this reason, the height H of the protrusion 34 is preferably set to be from 0.2 mm to 0.5 mm and the height H is more preferably set to be from 0.3 mm to 0.4 mm.

As shown in Figs. 4 and 5A, in the wall portion 34A constituting the protrusion 34, the wall surface 34C is inclined in a direction away from the center of the wall portion 34A as the wall surface 34C faces the step surface 12B side, and an opening area inside the protrusion 34 is formed in a cone shape narrowing toward the step surface 12B side. As shown in Fig. 5A, an angle θ formed by the opposing wall surfaces 34C in the protrusion 34 is set to be from 15° to 40°.

Here, when the angle θ formed by the wall surfaces 34C of the protrusions 34 is less than 15°, the wall portions 34A tend to be deformed and collapse. However, when the angle θ formed by the wall surfaces 34C of the protrusions 34 exceeds 40°, the rate at which the reflected light from the wall surface 34C is emitted directly from the protrusion 34 is increased.

Therefore, it is preferable to set the angle θ formed by the opposing wall surfaces 34C of the protrusions 34 to be from 15° to 40°. In addition, when the angle θ formed by the wall surfaces 34C is set to be from 15° to 40°, a mold is easily removed at the time of manufacturing the tire, and moldability is improved. As a result, the collapse of the protrusions is reduced, and the durability of the protrusions is improved.

As shown in Figs. 3 and 4, the step surface 12B remains on the inner side of the protrusion 34, and regular hexagonal bottom portions, which are surrounded by the wall surfaces 34C of each wall portion 34A, are formed on the inner side of the protrusion 34 by the step surface 12B.

As shown in Fig. 5A, the step surface 12B that forms the bottom portion is configured as a flat surface, but as shown in Fig. 5B, the step surface 12B may be a curved surface having a sectional arc shape in which the central portion is recessed inwardly. In this case, a dimension from the most recessed portion of the step surface 12B constituting the bottom surface to the top surface 34B of the protrusion 34 is defined as the height H.

In this way, when the step surface 12B forming the bottom portion is a curved surface, the reflection of light incident into the protrusion 34 is suppressed, such that the dark portion 20 can be made darker and the contrast with portions other than the dark portion 20 can be increased.

As shown in Fig. 3, in the protrusion 34, a total area S (shown by an oblique line in Fig. 3) of the top surfaces 34B which are the top portions of each wall portion 34A is set to be from 5 to 30 when an inner area M inside the wall portion 34A constituting the protrusion 34 is 100.

Here, when the total area S of the top surfaces 34B of each wall portion 34A exceeds 30, the area of the top surface 34B where the direct reflection of light occurs is widened, and the effect of the dark portion 20 is reduced. However, when the total area S of the top surfaces 34B is less than 5, the rigidity of the wall portion 34A is lowered. Therefore, it is preferable to set the total area S of the top surfaces 34B to be from 5 to 30 when the inner area M inside the wall portion 34A is 100.

In the present embodiment, a case in which the top portion of the wall portion 34A is constituted by a surface will be described as an example, but the present embodiment is not limited thereto. As described above, one wall surface 34C of each wall portion 34A may intersect the other wall surface 34C at the top portion, and the top portion may have a linear shape. In this case, since the total area of the top portion approaches "0", the total area of the top portion of each wall portion 34A when the inner area M is 100 is 30 or less, that is, may be more than 0 but equal to or less than 30.

Next, the action and effect of the tire according to the present embodiment will be described. That is, the tire side portion 12 or the groove bottom 28A of the circumferential groove 28 of the tread 26 is provided with the mark portions 14, 16, and 30 for forming a mark. The dark portions 20 constituting these mark portions 14, 16, and 30 are constituted by the protrusions 34 which have a hexagonal shape and a height of from 0.3 mm to 0.4 mm.

Since the light incident into the protrusion 34 is suppressed from being reflected and thus can look dark, the dark portion 20 constituted by the protrusion 34 can look blacker than the blackness of the tire. Therefore, the contrast between the dark portion 20 and the portions other than the dark portion 20 can be increased to improve the visibility.

The wall surfaces 34C constituting the protrusions 34 face six directions. Therefore, even if light is reflected on each wall surface 34C, the reflection directions of light can be made different, and the concentration of reflected light is suppressed. As a result, since the pattern portion looks black even when viewed from various angles, the anisotropy is improved and the visibility is improved.

Further, the pitch P between adjacent protrusions 34 is set to be from 0.2 mm to 0.3 mm. For this reason, the antireflection effect is further enhanced as compared with a case in which the protrusions 34 are closer than 0.15 mm or a case in which the protrusions are separated by more than 0.4 mm. As a result, the dark portion 20 constituting the mark looks blacker.

Since each protrusion 34 is hexagonal in plan view, it is possible to densely arrange the plurality of protrusions 34 in a lateral direction and an oblique direction. Therefore, as in the present embodiment, the adjacent protrusions 34 are closely attached to each other to share the wall portion 34A. In addition, it is possible to increase the rigidity by constructing the honeycomb structure in which the adjacent protrusions 34 support each other. Since each protrusion 34 can be densely arranged, the contrast can be increased to further improve the visibility.

In addition, the wall surface 34C constituting the protrusion 34 is inclined, and the angle θ formed by the opposing wall surfaces 34C is set to be from 15° to 40°. When the angle θ formed by the opposing wall surfaces 34C is greater than 40°, a ratio in which the reflected light from the wall surfaces 34C returns from the protrusions 34 to the outside is increased, such that the improvement in the visibility is reduced. That is, light is reflected and thus the difference in contrast with the bright portion 22 is reduced, such that the improvement in the visibility is reduced.

Here, when the angle θ formed by the opposing wall surfaces 34C is less than 15°, the wall portions 34A constituting the protrusions 34 tend to collapse. Therefore, it is possible to improve the durability of the protrusion 34 by setting the angle θ formed by the opposing wall surfaces 34C to be 15° or more.

The incident light into the protrusion 34 is repeatedly reflected between the opposing wall surfaces 34C, and is diffused-reflected on the wall surface 34C, such that the incident light can be attenuated. As a result, the dark portion 20 constituted by the protrusion 34 can look blacker.

The total area S of the top surfaces 34B constituting the protrusions 34 is set to be from 5 to 30 when the inner area M inside the wall portion 34A constituting the protrusion 34 is 100.

This makes it possible to increase the proportion occupied by the inner region of the protrusion 34 that suppresses the reflection of light, such that the reduction effect in the reflection by the protrusion 34 can be enhanced. Therefore, it is possible to further improve the visibility.

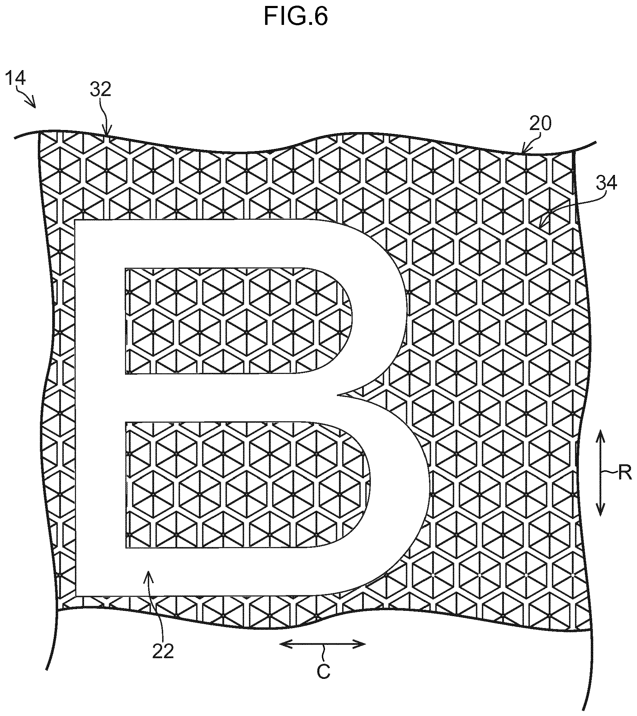

In Fig. 6, a part of the first mark portion 14 is shown. A character constituting the bright portion 22 is constituted by a smooth surface and has a glossy appearance, and reflects light. The bright portion 22 is surrounded by the dark portion 20 which absorbs light to suppress the reflection of light.

Therefore, the contrast is increased between the bright portion 22 reflecting light and the dark portion 20 absorbing light to be able to increase the visibility of the character displayed on the first mark portion 14. This can increase the uniformity in the appearance of the pattern portion of the dark portion 20 even when viewed from various angles to improve the visibility.

In the present embodiment, the configuration in which the adjacent protrusions 34 are closely attached and connected to each other has been described, but the present embodiment is not limited thereto.

### (Second Embodiment)

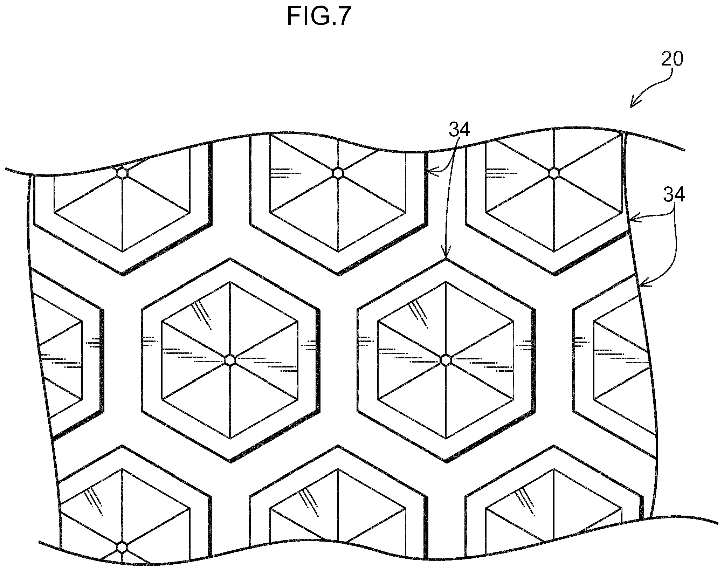

That is, as shown in Fig. 7, even when protrusions 34 having a hexagonal shape are independently provided, the above-described effect can be obtained.

In the present embodiment, as an outer surface of a tire, a tire side portion 12 and a groove bottom 28A of a circumferential groove 28 in a tread 26 have been described as an example, but the present embodiment is not limited thereto. Examples of other outer surfaces of the tire include a surface visible from an outside of the tire such as a tread portion or a groove wall of the tread.

In each of the embodiments, only a case in which the wall surface 34 C of the protrusion 34 is inclined has been described, but the embodiments are not limited thereto, and the wall surface 34C is not necessarily inclined.

### <Test Examples>

In order to demonstrate an effect of the disclosure, the following tests 1 to 3 were performed.

### (Test Condition)

As test tires, tires having a size of 205/55R16 and a cross section height SH of 114 mm were used.

In each of the test tires, the first mark portion 14 of the first embodiment was provided. In the dark portion 20 constituting the first mark portion 14, the configuration in which the height H of the protrusion 34 is 0.35 mm, the pitch P is 0.2 mm, the angle θ formed by the opposing wall surfaces 34C is 25°, and the total area S of the top surface 34B of the protrusion 34 is 20 when the inner area M inside the wall portion 34A is 100 was set as a reference value. In each test, an evaluation test was conducted using the test tires having values shown in Tables 1 to 3 as the height H, the pitch P, the angle θ, or the total area S.

### (Test Method)

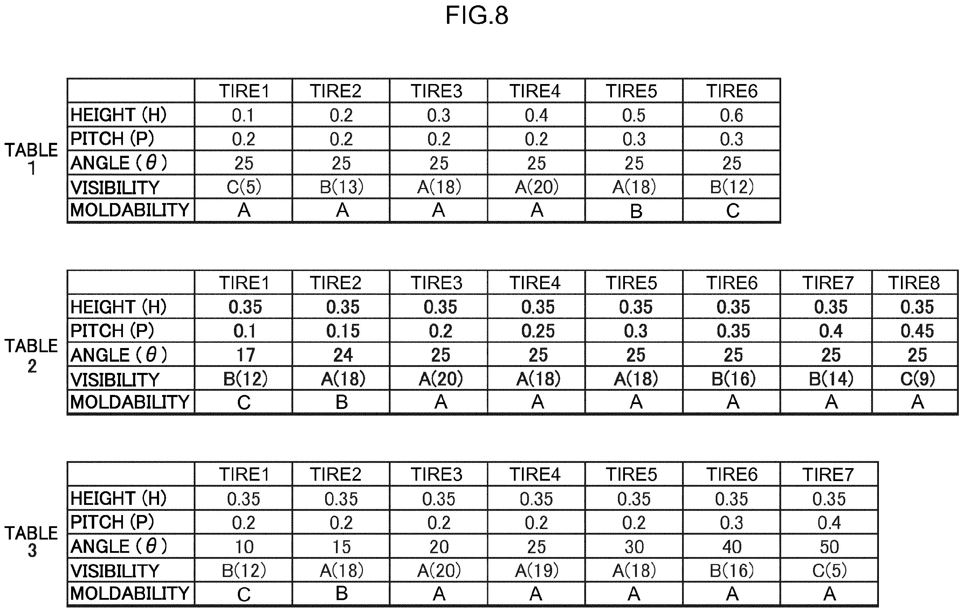

In the test, visibility when the dark portion 20 of the first mark portion 14 was viewed from each direction was evaluated. First, each test tire was assembled to an application rim. Then, twenty viewers observed each test tire, and a questionnaire survey as to whether the dark portion 20 looks blacker than a usual tire was performed on the twenty viewers. Survey results were shown as "visibility" in Tables 1 to 3 (see Fig. 8).

In each Table, a case in which the number of viewers answered that the dark portion 20 looked clearly black was 18 or more was evaluated as A, a case in which the number of viewers answered that the dark portion 20 looked clearly black was from 10 to 17 was evaluated as B, and a case in which the number of viewers answered that the dark portion 20 looked clearly black was 9 or less was evaluated as C. In each Table, the number of viewers answered that the dark portion 20 looked clearly black was also shown.

In this test, the moldability of the protrusion 34 was evaluated. First, each test tire was manufactured, and the occurrence of bare was visually evaluated by the protrusion 34 of each test tire and the moldability was evaluated based on a generation rate of bare at the protrusion 34 as an index. The evaluation results were shown in Tables 1 to 3 as "moldability". In each of the Tables 1 to 3, the moldability of the pattern portion was represented by A in a case in which the generation rate of the bare is less than 0.1 %, was represented by B in a case in which the generation rate of the bare is from 0.1 to less than 0.3 %, and was represented by C in a case in which the generation rate of the bare is 0.3 % or more.

### (Test 1)

In Test 1, as shown in Table 1 of Fig. 8, Tires 1 to 6 in which the height H of the protrusion 34 was changed were prepared and tested. Except for the height H, the above-described reference values were used, and the pitch P was adjusted according to the height H.

As shown in Table 1, it was confirmed that the visibility is improved in consideration of the moldability when the height H is in a range of from 0.2 mm to 0.5 mm and the visibility is further improved when the height H is in a range of from 0.3 mm to 0.4 mm.

### (Test 2)

In Test 2, as shown in Table 2 of Fig. 8, Tires 1 to 8 in which the pitch P between the protrusions 34 was changed were prepared and tested. Except for the pitch P, the above-described reference values were used, and the angle θ was adjusted according to the pitch P.

As shown in Table 2, it was confirmed that the visibility is improved in consideration of the moldability when the pitch P is in a range of from 0.15 mm to 0.4 mm and the visibility is further improved when the pitch P is in a range of from 0.2 mm to 0.3 mm.

### (Test 3)

In Test 3, as shown in Table 3 of Fig. 8, Tires 1 to 7 in which the angle θ formed by the opposing wall surfaces 34C was changed were prepared and tested. Except for the angle θ, the above-described reference values were used, and the pitch P was adjusted according to the angle θ.

As shown in Table 3, it was confirmed that the visibility is improved in consideration of the moldability in the range of the angle θ from 15° to 40°.

## Claims

1. A tire (10) comprising: protrusions (34) having a hexagonal shape in plan view and formed on an outer surface of the tire, wherein a height (H) of the protrusions (34) is set to be from 0.2 mm to 0.5 mm,
**characterised in that**
the protrusions (34), having a hexagonal shape in plan view, adjacent to each other are arranged at a pitch (P) of from 0.15 mm to 0.4 mm, and
hexagonal bottom portions are formed on the radially inner side of each protrusion (34).

2. The tire according to claim 1, wherein wall portions (34A) of the adjacent protrusions (34) are connected to each other.

3. The tire according to claim 1 or 2, wherein a wall surface (34C) constituting the protrusion (34) is inclined, and an angle formed by the wall surfaces (34C) opposing to each other is set to be from 15° to 40°.

4. The tire according to any one of claims 1 to 3, wherein when an area (M) inside the wall portion (34A) constituting the protrusion (34) is 100, an area (S) of a top portion (34B) of the wall portion is 30 or less.

## Patentansprüche

1. Reifen (10), umfassend: Vorsprünge (34), welche eine hexagonale Form in der Draufsicht aufweisen und welche auf einer Außenfläche des Reifens geformt sind, wobei eine Höhe (H) der Vorsprünge (34) zwischen 0,2 mm und 0,5 mm eingestellt ist,
**dadurch gekennzeichnet, dass**
die Vorsprünge (34), welche eine hexagonale Form in der Draufsicht aufweisen, nebeneinander in einem Abstand (P) von 0,15 mm bis 0,4 mm angeordnet sind, und
hexagonale untere Abschnitte auf der radialen Innenseite jedes Vorsprungs (34) geformt sind.

2. Reifen nach Anspruch 1, wobei Wandabschnitte (34A) der nebeneinanderliegenden Vorsprünge (34) miteinander verbunden sind.

3. Reifen nach Anspruch 1 oder 2, wobei eine Wandfläche (34C), welche den Vorsprung (34) bildet, geneigt ist, und wobei ein Winkel, der von den gegenüberliegenden Wandflächen (34C) gebildet wird, zwischen 15° und 40° eingestellt ist.

4. Reifen nach einem der Ansprüche 1 bis 3, wobei, wenn eine Oberfläche (M) innerhalb des Wandabschnitts (34A), welcher den Vorsprung (34) bildet, 100 ist, eine Oberfläche (S) eines oberen Abschnitts (34B) des Wandabschnitts 30 oder weniger beträgt.

## Revendications

1. Bandage pneumatique (10) comprenant: des saillies (34) ayant une forme hexagonale dans une vue en plan et formées sur une surface externe du bandage pneumatique, dans lequel une hauteur (H) es saillies (34) est ajustée de sorte à être comprise entre 0,2 mm et 0,5 mm ;
**caractérisé en ce que** :
les saillies (34), ayant une forme hexagonale dans une vue en plan, adjacentes les unes aux autres, sont agencées à un pas (P) compris entre 0,15 mm et 0,4 mmm ; et
des parties inférieures hexagonales sont formées sur le côté radialement interne de chaque saillie (34).

2. Bandage pneumatique selon la revendication 1, dans lequel des parties de paroi (34A) des saillies adjacentes (34) sont connectées les unes aux autres.

3. Bandage pneumatique selon les revendications 1 ou 2, dans lequel une surface de paroi (34C) constituant la saillie (34) est inclinée, et un angle formé par les surfaces de paroi (34C) opposées les unes aux autres est ajusté de sorte à être compris entre 15° et 40°.

4. Bandage pneumatique selon l'une quelconque des revendications 1 à 3, dans lequel une aire (M) à l'intérieur de la partie de paroi (34A) constituant la saillie (34) correspond à 100, une aire (S) d'une partie supérieure (34BV) de la partie de paroi correspondant à 30 ou moins.
